# EUROPEAN PATENT SPECIFICATION

(11) **EP 2 375 797 B1**
(45) Date of publication and mention of the grant of the patent: **13.11.2013**
(21) Application number: 11275056.7
(22) Date of filing: 29.03.2011
(51) Int. Cl.: H04W 8/26, H04L 12/28, H04W 88/16

(54) **ADSL and 3G Traffic Aggregation in Home Gateway Environment**
ADSL- und 3G-Datenverkehraggregation in Home-Gateway-Umgebung
Agrégation de trafic ADSL et 3G dans un environnement de passerelle domestique

(30) Priority: 29.03.2010 ES 201030463
(43) Date of publication of application: 12.10.2011
(73) Proprietor: Vodafone Group PLC, Newbury Berkshire RG14 2FN (GB); Vodafone España, S.A.U., 28108 Alcobendas (ES)
(72) Inventor: De Pasquale, Andrea, E-28050, Madrid (ES); Dominguez Romero, Francisco, E-28050, Madrid (ES); Zas Couce, Luis, E-28050, Madrid (ES); Tenorio Sanz, Santiago, E-28050, Madrid (ES); Elbasyouny, Tarek Mohamed, 28050, Madrid (ES)
(74) Representative: Boult Wade Tennant

(56) References cited:
- GB-A- 2 462 939
- DrayTek: "Vigor 2955 Dual-WAN SSL VPN Appliance User Guide V1.0", , 30 October 2009 (2009-10-30), XP002638695, Retrieved from the Internet: URL:http://www.draytek.com/user/index.php [retrieved on 2011-05-26]

## Description

### Field of the Invention

The present invention is comprised within the field of telecommunications, and more specifically it relates to data service accessibility simultaneously settled via radio by mobile networks and via wire/fixed network.

### Background of the Invention

In the State of the Art, there are several solutions capable of working with both mobile and fixed technologies but yet, not simultaneously. 3G and ADSL, preferred technologies that are globally deployed, are frequently considered excludible. In spite of this idea, there exist several solutions that use 3G and ADSL in the prior art. However, 3G is merely employed as a fallback from ADSL.

As a further development, a company named Workman Engineering has manufactured a device - the "Ivory II Wifi Router" - that combines wireless and/or wired internet connections into one by using independent networks with different IP addresses. The combination of the two connections is achieved by multiplexing.

Another example of prior art is US 2008019272, which discloses a system of multiplexing DS1 traffic across wired and wireless Ethernet devices. DS1 is a standard to transmit voice and data. This document deals with transmitting traffic specially using TDM (time division multiplex) in Ethernet systems to transmit voice traffic jointly with data traffic.

The existing solutions discussed above lack flexibility. It thus would be desirable to provide customers using data services, with a device that has simultaneously fixed and mobile capabilities.

GB-2,462,939 relates to an email communications system having a secondary wireless connection to the internet, in case the primary connection fails. A wireless link is provided to an access point, which routes data received through a public static IP address associated with the access point to a private static IP address.

A product marketed by Draytek as Vigor2955 is a broadband router with a dual-WAN interface. A secure socket layer (SSL) virtual private network (VPN) facility is implemented.

### Description of the Invention

The present invention achieves this goal by setting a procedure which enables a single IP address for both connections, fixed and mobile. This entails that packets are routed through both networks.

In accordance with the present invention, there is provided a gateway device for simultaneously connecting a device to a plurality of networks, including a primary network and a secondary network, said secondary network being a mobile telecommunications network, the gateway comprising:
- a plurality of communication modules each communication module configured to establish a connection and transfer data with a respective network, the communication module corresponding with the primary network being further configured to obtain an IP address to communicate with the primary network first; and
- aggregating means comprising:
   an assignation unit configured to assign a single IP address obtained from the established connection of the primary network to the remainder connections by using the address obtained from the said established connection; and
   a data exchange unit configured to exchange data traffic through the networks simultaneously.

In accordance with a further aspect of the invention is provided a control module for the gateway device comprising:
- a detection unit configured to calculate, for each network, packet delays and data traffic load;
- a regulation unit configured to regulate data traffic over each network.

It is also an object of the invention a method for data traffic aggregation over a plurality of networks, said networks including a primary network and a secondary network, said secondary network being a mobile telecommunication network, the method comprising the steps of:
- establishing a first connection to the primary network in order to obtain an IP address to communicate with said primary network;
- establishing at least one secondary connection having an IP address identical to the primary connection, said secondary connection being a connection over the secondary network, by using the IP address obtained from the primary network connection; and
- exchanging data traffic over the primary network and over the secondary network.

Still other features of the present invention are to provide a method of detecting, for each network, whether a state of congestion is close to be reached, and regulating data traffic over the networks, by an implementation of a mechanism of delay equalization, in order to avoid performance degradation.

As can be seen, the present invention is based on a single IP connection, the same for both connections, each one having its own path to carry the traffic.

This arrangement has advantages over the prior art discussed above because it allows bandwidth to be shared amongst different applications that use the same IP public address and run over different paths, namely different networks. By contrast, prior art solutions do not employ a single IP address but an IP per network. As a consequence of using different IP addresses, the bandwidth cannot be shared amongst applications. Resources that are available in a connection cannot be suitable reallocated to another connection if said connections have different IP addresses.

Due to this fact, two established connections using the same IP to transmit and receive data traffic over respective networks, a problem arises in case of said networks would have different delays. This invention also provides a mechanism of equalization said delays.

For the sake of clarity, the description here refers to a single fixed connection and a single mobile connection, but the same invention can be applied in case of several fixed networks and several mobile networks, in which the first connection getting an IP address is defined as the primary connection.

As an example, the following cases are considered:
- Primary connection: ADSL; other network: 3G
- Primary connection: ADSL; other network: LTE
- Primary connection: ADSL; other networks 3G and LTE
- Primary connection: fiber based fixed network; other network 3G
- Primary connection: 3G; other network: LTE

In the coming text ADSL + 3G case will be the preferred scenario considered.

In addition, when dealing with this approach it is worth taking account of how packet delays are handled. In particular, TCP performances can be affected when the involved networks introduce very different transmission delays, as happens sometimes, especially when networks are of a different nature and architecture as in the case of mobile and fixed based networks.

As stated above, a mechanism of equalization said delays is also addressed by the present invention. A specific function is proposed for managing, in the transport protocol TCP, the different delays that the packets may suffer.

### Brief Description of the Drawings

A series of drawings which aid in better understanding the invention and which are expressly related with an embodiment of said invention, presented as a non-limiting example thereof, are very briefly described below.
Figure 1 shows an example of architecture according to the present invention.
Figure 2 shows Mobile network architecture including GERAN and UTRAN.
Figure 3 shows an embodiment according to the present invention.

### Description of a Preferred Embodiment of the Invention

A residential or home gateway (9) (HG) is a networking device, used as a gateway to connect devices (10) in the home to the Internet (16) or other WAN. For instance, a modem is considered a HG. In order to deliver traffic simultaneously in an efficient way via multiple networks, for example via one fixed-based network like ADSL and one mobile network like 3G or LTE the proposed solution requires the home gateway (HG) using a single IP public address for both (or all) of the multiple networks. By doing so, each TCP client application connected to the home gateway (HG) can establish a normal TCP/IP connection using a single TCP port and the IP client address. As a feature, the home gateway (HG) will have access to two connections with the same IP source address, so both can be used simultaneously.

On the other hand, mobile networks (22,23) require an identification of a device on the mobile network. The identification unit represents a subscriber of a service in said network (this element is the SIM in GSM or the UICC in UMTS).

Then in the transport network interconnecting the HG (9) with Internet there will be a set of routers that will have connection with both networks (fixed based, e.g. ADSL and mobile).

The first Router having the capability to reach the HG via the fixed or the mobile network is called Common Router (13). It is mostly a typical router with routing functions, connected to both networks and being aware the UE can be reachable by any path. However, according to a particular embodiment of the present invention which is suitable for certain situations, it may require the common router (13) manages path delays.

Routers will route incoming and ongoing packets based on standard routing protocols used in the industry.

Protocols can be divided into two categories: Distance-vector routing protocol and Link-state routing protocol. There are many examples of routing protocols in the industry.

Distance-vector routing protocol examples are:
- Routing Information Protocol (RIP)
- Interior Gateway Routing Protocol (IGRP)
- Enhanced Interior Gateway Routing Protocol (EIGRP)

Example of Link-state routing protocols are:
- Open Shortest Path First (OSPF)
- Intermediate system to intermediate system (IS-IS)

### Home gateway communication

The procedure of communicating with a single public IP address encompasses several steps:
- Firstly the Primary connection (e.g. based on ADSL) has to be set-up by HG. Once this connection is established, an IP address is assigned to the HG.
- After that, the HG requests the establishment of a PDP context using this same IP address as per 3GPP TS 29.060-750, section 7.3.1.

The referred text is quoted below:
*'If the MS requests a dynamic PDP address and a dynamic PDP address is allowed, then the PDP Address field in the End User Address information element shall be empty. If the MS requests a static PDP Address then the PDP Address field in the End User Address information element shall contain the static PDP Address. In case the PDP addresses carried in the End User Address and optionally in the Protocol Configuration Option information element contain contradicting information, the PDP address carried in the End User Address information element takes the higher precedence.'*

The request of PDP context activation contains different parameters like the Access Point Name (APN) and type of address. When the parameters are duly configured, the PDP context is accepted. These tasks are performed by an assignation unit (7) in the home gateway (9).

The Gateway GPRS Support Node (17) (GGSN) needs to be configured taking into account which is the pool of IP addresses used by the DSL network. Then, such information is employed when receiving a PDP context activation of an IP address pertaining to said pool. The information comprises an indication that this particular HG has a double connection, the PDP context is thus accepted and all the systems (e.g. billing systems) will be informed accordingly. When both connections are established, only the common router(s) and the HG will realize that there is more than one path (two in case of fixed plus mobile) to route the packets towards the single IP address, the common router will always advertise itself to the ISP (15) as the next hop to reach the static public IP address pool from the internet. The GGSN and the BRAS/BNG do not know (and do not need to know) that there are actually two parallel connections toward the HG. However it is worth to mention that stateful services like flow based charging, heuristic classification and fair usage policy enforcement will not be possible to use in the GGSN (17).

Alternatively, in case the 3G is established firstly while the ADSL network is not operative (e.g. due to ADSL not active yet or a temporary failure), ADSL becomes active, the 3G connection is released and the procedure is initiated as explained before.

### Control 3G connection for Congestion Cases

In order to avoid congestion states, the present invention needs a control mechanism for the 3G. As the 3G connection is shared among many other users, it is necessary to provide a criterion to decide how to share the bandwidth. A control unit (4) is responsible of said functions in the home gateway (9).

By way of example, consider ADSL+3G users, who have two network connections whereas, on the other hand, the rest of the users have only the 3G active. With the aim of avoiding congestion and providing a good quality of service to all the users, it will be necessary to reduce the throughput to the ADSL+3G users in the 3G network.

It is not complicated to identify the ADSL+3G users (e.g. from their known dedicated IP address range). Then the Core Network (e.g. the PCRF) can mark the QoS of this 3G PDP context as a low priority one and then it will not affect the rest of the "normal" 3G connections.

### Delay equalization function

It is acknowledged existing TCP connections whose packets run with different variable delays can suffer performance degradation.

At present, the way in which the TCP protocol usually recognizes a segment loss, and hence requires a re-transmission, is based on the Round Trip Time (RTT) measurement. RTT is defined as the time between sending a TCP segment and receiving the corresponding acknowledgment. TCP implementations have different mechanisms to measure the RTT for a given TCP connection, the old TCP implementation relies on one sample measurement per window size, in this case each TCP peer will measure the time between sending one TCP segment and receiving the corresponding acknowledgment from the other peer and will use this value as the RTT for the total duration of the ongoing window size, however this very often leads to inaccurate estimation of the average RTT for the given window size.

An advanced implementation uses the time stamp TCP option to measure the RTT more accurately. In this case the sending TCP peer will attach the current time stamp to the TCP segments before sending them to the destination peer, and when the destination peer acknowledge the reception of each of these segments, it will only need to mirror the corresponding time stamp back to the source peer in the acknowledgment segment, so that at the source peer a simple subtraction between the current time and the mirrored time stamp will reveal the RTT for each TCP segment. Then the source peer can have up to date and accurate RTT values for the TCP connection.

When using different networks (e.g. 3G and ADSL, or LTE and ADSL or even 3G and LTE) simultaneously as access networks and TCP as a transport protocol, it is very likely to occur that a TCP peer (either at the client or the server side) measures the RTT based on the faster access link (e.g. ADSL) delay, this will happen if a TCP segment and its acknowledgment follow the same fast path (ADSL), the probability of this happening is 25% in a random environment.

We refer to the measured RTT in this event as *RTT A.* In a less critical but more likely event, a TCP peer (either at the client or the server side) measures the RTT based on a combination of the fast and the slow links delays, this will happen if a TCP segment and its acknowledgment follow the opposite paths (ADSL and 3G), the probability of this happening is 50% in a random environment. We refer to the measured RTT in this event as *RTT B*.

When *RTT A* is used, the TCP segments that traverse the slower access link (3G) could be wrongly considered lost by the receiving peer, for the reason that it takes longer than *RTT A* to send a TCP segment and receive its acknowledgment when the slower link is used in either or both directions, this will happen in 75% of the cases. When *RTT B* is used, only the TCP acknowledgments that traverse the slower access link (3G), while the 'acknowledged' TCP segment has also traversed the slower access link (3G) could be wrongly considered lost by the receiving peer, for the reason that it takes longer than *RTT B* to send a TCP segment and receive its acknowledgment, both over the slower link, this will happen in 25% of the cases

The above scenarios will result in 0.25*0.75 + 0.5*0.25 = 31.25% probability of TCP retransmissions and, even worse, in dramatic reductions of the congestion window size that will negatively affect the end to end throughput.

In order to tackle these scenarios, a detection unit (5) included in control module (4) is proposed to handle different delays that may occur according to the two paths that data packets follow. The said detection unit (5) requires a function that implements two operating modes in order to equalize the delays experienced by the packets when going trough the different networks.

Delays require to be equalized if the average RTT difference between the two networks is higher than a configurable threshold "X". This may serve as event to trigger the actions performed by the function,

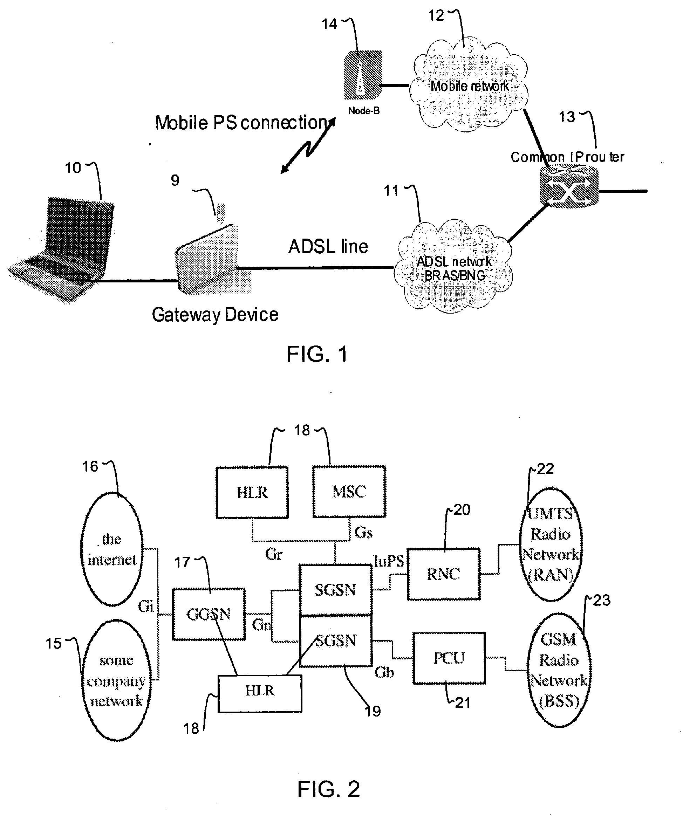

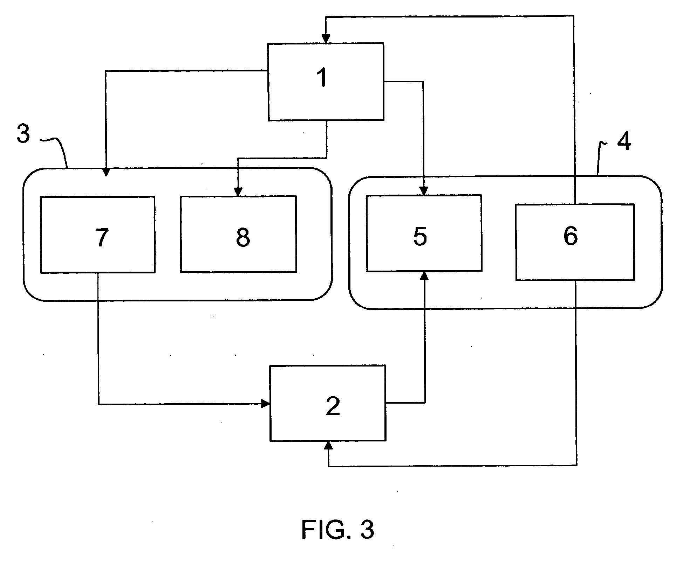

The function is allocated in the detection unit (5) of HG or in the common IP router. See figures 1 and 3.

The function implements two modes of delay equalizers:

### 1) Artificial delays to be introduced either in the HG or in the Common Router:

The home gateway would receive/send packets through each of the networks. The home gateway at each PDP context set-up over the radio can evaluate the ADSL and Mobile Network RTT by sending a series of pings.

If the measured delay difference is higher than "X", the home gateway will queue the packets deriving from the network with lower RTT (NetFast) in order to introduce an artificial delay and equalize the average RTT seen by the TCP or UDP clients.

For each home gateway connection, a RTT assessment should be carried and an artificial delay added if needed. In order to avoid performance degradation and congestion, a regulation unit (6) controls the data flow over each path.

A set of criteria can be established in order to evaluate the opportunity to maintain active the artificial delay:
- One criterion is to maintain a continuous artificial delay, with periodical (e.g. twice a day) reassessment of the suitable delay.
- Another criterion is based on an artificial delay with adjustments:
   The artificial delay will be maintained as long as the downlink or uplink throughput of the network with the highest RTT (called NetSlow) contributes significantly to the overall throughput achieved in downlink or in uplink by the home gateway.

Every "Z" seconds the home gateway measures the ongoing throughput and compares the percentage of throughput carried by NetSlow towards a downlink and/or an uplink threshold Y_DL and Y_UL.

If the percentage is lower than Y_DL and Y_UL, and if the Mobile Network is NetSlow, the connection over the Mobile Network will be terminated.

Note that the above mentioned mechanism for delay equalization can be executed in the Common IP Router. In this case it is only needed to have the function in one the equipments (HG or common router).

### 2) TCP acknowledgement through the opposite path

In order to equalize the difference in delay between ADSL and 3G, each TCP acknowledgment segment is forced to follow the opposite path compared the corresponding 'acknowledged' TCP segment. By doing this, it is ensured that the measured (and the actual) RTT delay is always a combination of the slow and fast link delay.

This mode requires the common IP router (13) to track each uplink TCP segment sequence number and ensure that the corresponding downlink acknowledgment segment will be routed to the opposite access network, compared to the uplink segment.

The home gateway also needs to track each downlink TCP segment sequence number and ensure that the corresponding uplink acknowledgment segment will be routed to the opposite access network, compared to the downlink segment.

Therefore, this second option needs implementation in both common IP router (13) and HG (9). In the latter, it is carried out by means of the regulation unit (6).

### GLOSSARY

It is well-known that abbreviations and acronyms are frequently used in the mobile telephony field. Below is a glossary of acronyms/terms used throughout the present specification:
- 3GPP: The 3rd Generation Partnership Project
- ADSL: Asymmetric Digital Subscriber Line
- BNG: Broadband Network Gateway
- BRAS: Broadband Remote Access Server
- DSL: Digital Subscriber Line
- GERAN: GSM EDGE Radio Access Network
- GPRS: General Packet Radio Service
- GGSN: Gateway GPRS Serving/Support Node
- MS: Mobile Station
- OSPF: Open Shortest Path First
- PCRF: Policy and Charging Rules Function
- PDP: Packet Data Protocol
- IP: Internet Protocol
- RTT: Round Trip Time
- SIM: Subscriber Identity Module
- TCP: Transmission Control Protocol
- UICC: Universal Integrated Circuit Card
- UTRAN: UMTS Terrestrial Radio Access Network

### Reference Number List

- 1: Wired communication module.
- 2: Radio communication module.
- 3: Aggregating means.
- 4: Control module.
- 5: Delay measuring unit.
- 6: Data flow and congestion controller.
- 7: Assignation unit.
- 8: Data exchange unit.
- 9: Gateway device.
- 10: User equipment.
- 11: ADSL network.
- 12: Mobile network.
- 13: Common router.
- 14: Node B.
- 15: Company network.
- 16: Internet.
- 17: GGSN
- 18: HLR
- 19: MSC
- 20: RNC
- 21: PCU
- 22: UMTS radio network
- 23: GSM radio network

## Claims

1. Gateway device (9) for simultaneously connecting a device to a plurality of networks, including a primary network and a secondary network, said secondary network being a mobile telecommunications network (12), the gateway comprising:
- a plurality of communication modules (1,2), each communication module configured to establish a connection and transfer data with a respective network, the communication module corresponding with the primary network being further configured to obtain an IP address to communicate with the primary network first; and
- aggregating means (3) comprising:
an assignation unit (7) configured to assign an IP address which is identical to the IP address obtained for the established connection of the primary network to the remainder connections; and
a data exchange unit (8) configured to exchange data traffic through the networks simultaneously.

2. Gateway device according to claim 1, **characterized in that** it further comprises
- a control module (4) comprising
a detection unit (5) configured to calculate, for each network, packet delays and data traffic load;
a regulation unit (6) configured to regulate data traffic over each network.

3. Gateway device according to claim 1 or 2, wherein at least the primary network is a wired network based on a technology selected from:
- xDSL,
- ADSL,
- VDSL,
- Fiber;
and the mobile telecommunications network is based on a technology selected from:
- UMTS,
- GSM,
- LTE based on FDD,
- LTE based on TDD,
- LTE-Advanced.

4. Gateway device according to claim 2, **characterized in that** the regulation unit (6) regulates data traffic, by establishing priority levels based on at least one of the following criterion:
- packet delays of each network,
- load of each network,
and combination thereof.

5. Gateway device according to claim 2, **characterized in that** the detection unit (5) is arranged to measure the average RTT difference between the networks and determine whether to trigger, in dependence upon a configurable safety threshold (X), a mechanism of delay equalization in order to avoid performance degradation.

6. Method for data traffic aggregation over a plurality of networks, said networks including a primary network and a secondary network, said secondary network being a mobile telecommunication network (12), the method comprising the steps of:
- establishing a first connection to the primary network in order to obtain an IP address to communicate with said primary network;
- establishing at least one secondary connection having an IP address identical to the primary connection, said secondary connection being a connection over the secondary network, by using the IP address obtained from the primary network connection; and
- configuring the primary network and the secondary network to permit the exchange of data traffic over the primary and secondary networks simultaneously.

7. Method for data traffic aggregation over different networks according to claim 6, **characterized in that** it further comprises the steps of
- detecting, for each network, whether a state of congestion is close to be reached, and
- regulating data traffic over the networks, by an implementation of a mechanism of delay equalization, in order to avoid performance degradation.

8. Method for data traffic aggregation over different networks according to claim 6 or 7, **characterized in that** the step of establishing a secondary connection comprises:
- requesting the establishment of a PDP context by using the IP address of the primary connection,
- activating the PDP context by the mobile radio network in dependence upon previous information in order to obtain a valid IP address for at least one radio connection.

9. Method according to claim 6 or 7, wherein the primary network is a wired network based on a technology selected from:
- xDSL
- ADSL (11),
- VDSL
and the mobile radio network is based on a technology selected from:
- UMTS (22),
- GSM (23),
- LTE based on FDD,
- LTE based on TDD,
- LTE-Advanced.

10. Method for data traffic aggregation over different networks according to claims 7 and 9, **characterized in that** the step of detecting a congestion state further comprises:
- sending packets and receiving acknowledgements of said packets over the wired network in order to estimate an average RTT (RTT A) for said network,
- sending packets and receiving acknowledgements of said packets over at least one mobile radio network in order to estimate an average RTT (RTT B),
- measuring the average RTT difference between the wired and each one of the mobile radio networks to trigger, in dependence upon a configurable safety threshold (X), a suitable mechanism of delay equalization for the network having the lower RTT value in order to regulate data traffic and avoid performance degradation.

11. Method for data traffic aggregation over different networks according to claim 10, **characterized in that** the mechanism of delay equalization comprises:
- producing an artificial delay by queuing the packets from the network having a lower RTT, and delivering after a waiting time is reached, the waiting time being calculated based on the RTT differences to maintain a similar delay to the network having the higher RTT.

12. Method for data traffic aggregation over different networks according to claim 11, **characterized in that** the mechanism of delay equalization further comprises:
- setting, for uplink and downlink channels of the network having the highest RTT, a contribution threshold (Y_DL, Y_UL) representing a throughput percentage with respect to the overall throughput,
- periodically estimating the throughput for the downlink and the uplink channels and comparing with its respective throughput threshold (Y_DL, Y_UL) in order to determine whether a significant contribution is reached for at least one of the channels, and
- maintaining the artificial delay, by queuing packets for the networks having lower RTT, provided that the contribution of the network having the higher RTT is significant.

13. Method for data traffic aggregation over different networks according to claim 12, **characterized in that** the step of regulating data traffic comprises:
- releasing a connection to the network having higher RTT provided that, for its uplink and downlink channels, the throughput contribution threshold is not reached and said network having higher RTT is a mobile radio network.

14. Method for data traffic aggregation over different networks according to any of claims 9 to 13, wherein the steps are performed either in the gateway device (9) or in the common router (13).

15. Method for radio and wired data traffic aggregation according to claims 7 and 9, **characterized in that** the steps of detecting packet delays further comprises:
- sending packets by the gateway device (9) over the lowest RTT network and receiving acknowledgements of said packets by the common router over the highest RTT network and sending packets by the gateway device (9) over the highest RTT network and receiving acknowledgements of said packets by the common router over the lowest RTT network in order to achieve on average a similar RTT for all the packets.

16. Method for data traffic aggregation over different networks according to claims 7 and 9, **characterized in that** the steps of detecting packet delays further comprises: sending packets by the common router over the lowest RTT network and receiving acknowledgements of said packets by the gateway device (9) over the highest RTT network and sending packets by the common router (13) over the highest RTT network and receiving acknowledgements of said packets by the gateway device (9) over the lowest RTT network in order to achieve on average a similar RTT for all the packets

17. Method for data traffic aggregation over different networks according to any of claims 6 to 15, **characterized in that** the step of regulating data traffic comprises setting a special priority to devices with an IP address pertaining to a subscriber of a wired network in order to give better quality of service to the users with only mobile radio connection.

## Patentansprüche

1. Gateway-Gerät (9) zum Verbinden eines Geräts gleichzeitig mit mehreren Netzwerken einschließlich einem primären Netzwerk und einem sekundären Netzwerk, wobei das genannte sekundäre Netzwerk ein mobiles Telekommunikationsnetzwerk (12) ist, wobei das Gateway Folgendes umfasst:
- mehrere Kommunikationsmodule (1, 2), wobei jedes Kommunikationsmodul zum Herstellen einer Verbindung und zum Übertragen von Daten mit einem jeweiligen Netzwerk konfiguriert ist, wobei das dem primären Netzwerk entsprechende Kommunikationsmodul ferner zum Erhalten einer IP-Adresse konfiguriert ist, um zuerst mit dem primären Netzwerk zu kommunizieren; und
- Aggregationsmittel (3), die Folgendes umfassen:
eine Zuweisungseinheit (7), die zum Zuweisen einer IP-Adresse konfiguriert ist, die mit der IP-Adresse identisch ist, die für die hergestellte Verbindung des primären Netzes erhalten wurde, mit den übrigen Verbindungen; und
eine Datenaustauscheinheit (8), die zum Austauschen von Datenverkehr gleichzeitig durch die Netzwerke konfiguriert ist.

2. Gateway-Gerät nach Anspruch 1, **dadurch gekennzeichnet, dass** es ferner Folgendes umfasst:
- ein Steuermodul (4), das Folgendes umfasst:
eine Erkennungseinheit (5), die zum Berechnen, für jedes Netzwerk, von Paketverzögerungen und Datenverkehrslast konfiguriert ist;
eine Reguliereinheit (6), die zum Regulieren von Datenverkehr über jedes Netzwerk konfiguriert ist.

3. Gateway-Gerät nach Anspruch 1 oder 2, wobei wenigstens das primäre Netzwerk ein verdrahtetes Netzwerk auf der Basis einer Technologie ist, die ausgewählt ist aus:
- xDSL,
- ADSL,
- VDSL,
- Faser;
und das mobile Telekommunikationsnetzwerk auf einer Technologie basiert, die ausgewählt ist aus:
- UMTS,
- GSM,
- LTE auf FDD-Basis,
- LTE auf TDD-Basis,
- LTE-Advanced.

4. Gateway-Gerät nach Anspruch 2, **dadurch gekennzeichnet, dass** die Reguliereinheit (6) Datenverkehr durch Herstellen von Prioritätsstufen auf der Basis von wenigstens einem der folgenden Kriterien reguliert:
- Paketverzögerungen jedes Netzwerks,
- Last jedes Netzwerks, und einer Kombination davon.

5. Gateway-Gerät nach Anspruch 2, **dadurch gekennzeichnet, dass** die Erkennungseinheit (5) so ausgelegt ist, dass sie die durchschnittliche RTT-Differenz zwischen den Netzwerken misst und ermittelt, ob, in Abhängigkeit von einer konfigurierbaren Sicherheitsschwelle (X), ein Verzögerungsausgleichsmechanismus ausgelöst werden soll, um Leistungsminderung zu vermeiden.

6. Verfahren zur Datenverkehrsaggregation über mehrere Netzwerke, wobei die genannten Netzwerke ein primäres Netzwerk und ein sekundäres Netzwerk beinhalten, wobei das genannte sekundäre Netzwerk ein mobiles Telekommunikationsnetzwerk (12) ist, wobei das Verfahren die folgenden Schritte beinhaltet:
- Herstellen einer ersten Verbindung mit dem primären Netzwerk, um eine IP-Adresse für die Kommunikation mit dem genannten primären Netzwerk zu erhalten;
- Herstellen wenigstens einer mit der primären Verbindung identischen sekundären Verbindung mit einer IP-Adresse, wobei die genannte sekundäre Verbindung eine Verbindung über das sekundäre Netzwerk ist, mit Hilfe der von der primären Netzwerkverbindung erhaltenen IP-Adresse; und
- Konfigurieren des primären Netzwerks und des sekundären Netzwerks, um den Austausch von Datenverkehr über das primäre Netzwerk und das sekundäre Netzwerk gleichzeitig zuzulassen.

7. Verfahren zur Datenverkehrsaggregation über verschiedene Netzwerke nach Anspruch 6, **dadurch gekennzeichnet, dass** es ferner die folgenden Schritte beinhaltet:
- Erkennen, für jedes Netzwerk, ob das Erreichen eines Überfüllungszustands kurz bevorsteht, und
- Regulieren von Datenverkehr über die Netzwerke durch eine Implementation eines Verzögerungsausgleichsmechanismus, um Leistungsminderung zu vermeiden.

8. Verfahren zur Datenverkehrsaggregation über verschiedene Netzwerke nach Anspruch 6 oder 7, **dadurch gekennzeichnet, dass** der Schritt des Herstellens einer sekundären Verbindung Folgendes beinhaltet:
- Anfordern der Erstellung eines PDP-Kontexts mit Hilfe der IP-Adresse der primären Verbindung,
- Aktivieren des PDP-Kontexts durch das mobile Funknetz in Abhängigkeit von früheren Informationen, um eine gültige IP-Adresse für wenigstens eine Funkverbindung zu erhalten.

9. Verfahren nach Anspruch 6 oder 7, wobei das primäre Netzwerk ein verdrahtetes Netzwerk auf der Basis einer Technologie ist, die ausgewählt ist aus:
- xDSL
- ADSL (11),
- VDSL
und das mobile Funknetz auf einer Technologie basiert, die ausgewählt ist aus:
- UMTS (22),
- GSM (23),
- LTE auf FDD-Basis,
- LTE auf TDD-Basis,
- LTE-Advanced.

10. Verfahren zur Datenverkehrsaggregation über verschiedene Netzwerke nach den Ansprüchen 7 und 9, **dadurch gekennzeichnet, dass** der Schritt des Erkennens eines Überlastungszustands ferner Folgendes beinhaltet:
- Senden von Paketen und Empfangen von Quittierungen der genannten Pakete über das verdrahtete Netzwerk, um eine durchschnittliche RTT (RTT A) für das genannte Netzwerk zu schätzen,
- Senden von Paketen und Empfangen von Quittierungen der genannten Pakete über wenigstens ein mobiles Funknetz, um eine durchschnittliche RTT (RTT B) zu schätzen,
- Messen der durchschnittlichen RTT-Differenz zwischen dem verdrahteten und jeweils einem der mobilen Funknetze, um in Abhängigkeit von einer konfigurierbaren Sicherheitsschwelle (X) einen geeigneten Verzögerungsausgleichsmechanismus für das Netzwerk mit der niedrigeren RTT auszulösen, um Datenverkehr zu regulieren und Leistungsminderung zu vermeiden.

11. Verfahren zur Datenverkehrsaggregation über verschiedene Netzwerke nach Anspruch 10, **dadurch gekennzeichnet, dass** der Verzögerungsausgleichsmechanismus Folgendes beinhaltet:
- Erzeugen einer künstlichen Verzögerung durch Einreihen der Pakete von dem Netzwerk mit einer niedrigeren RTT in eine Warteschlange, und Liefern nach dem Erreichen einer Wartezeit, wobei die Wartezeit auf der Basis der RTT-Differenzen berechnet wird, um eine ähnliche Verzögerung an dem Netzwerk mit der höheren RTT aufrechtzuerhalten.

12. Verfahren zur Datenverkehrsaggregation über verschiedene Netzwerke nach Anspruch 11, **dadurch gekennzeichnet, dass** der Verzögerungsausgleichsmechanismus ferner Folgendes umfasst:
- Einstellen, für Uplink- und Downlink-Kanäle des Netzwerks mit der höchsten RTT, einer Beitragsschwelle (Y_DL, Y_UL), die einen Durchsatzprozentanteil mit Bezug auf den Gesamtdurchsatz repräsentiert,
- periodisches Schätzen des Durchsatzes für die Downlink- und die Uplink-Kanäle und Vergleichen mit ihrer jeweiligen Durchsatzschwelle (Y_DL, Y_UL), um zu ermitteln, ob ein erheblicher Beitrag für wenigstens einen der Kanäle erreicht ist, und
- Aufrechterhalten der künstlichen Verzögerung durch Einreihen von Paketen für die Netzwerke mit der niedrigeren RTT in eine Warteschlange, unter der Voraussetzung, dass der Beitrag des Netzwerks mit der höheren RTT signifikant ist.

13. Verfahren zur Datenverkehrsaggregation über verschiedene Netzwerke nach Anspruch 12, **dadurch gekennzeichnet, dass** der Schritt des Regulierens von Datenverkehr Folgendes beinhaltet:
- Freigeben einer Verbindung mit dem Netzwerk mit der höheren RTT unter der Voraussetzung, dass die Durchsatzbeitragsschwelle für ihre Uplink- und Downlink-Kanäle nicht erreicht ist und das Netzwerk mit der höheren RTT ein mobiles Funknetz ist.

14. Verfahren zur Datenverkehrsaggregation über verschiedene Netzwerke nach einem der Ansprüche 9 bis 13, wobei die Schritte entweder im Gateway-Gerät (9) oder im gemeinsamen Router (13) ausgeführt werden.

15. Verfahren zur Funk- und verdrahteten Datenverkehrsaggregation nach den Ansprüchen 7 und 9, **dadurch gekennzeichnet, dass** die Schritte des Erkennens von Paketverzögerungen ferner Folgendes beinhalten:
- Senden von Paketen durch das Gateway-Gerät (9) über das Netzwerk mit der niedrigsten RTT und Empfangen von Quittierungen der genannten Pakete durch den gemeinsamen Router über das Netzwerk mit der höchsten RTT und Senden von Paketen durch das Gateway-Gerät (9) über das Netzwerk mit der höchsten RTT und Empfangen von Quittierungen der genannten Pakete durch den gemeinsamen Router über das Netzwerk mit der niedrigsten RTT, um im Durchschnitt eine ähnliche RTT für alle Pakete zu erzielen.

16. Verfahren zur Datenverkehrsaggregation über verschiedene Netzwerke nach den Ansprüchen 7 und 9, **dadurch gekennzeichnet, dass** die Schritte des Erkennens von Paketverzögerungen ferner Folgendes beinhalten: Senden von Paketen durch den gemeinsamen Router über das Netzwerk mit der niedrigsten RTT und Empfangen von Quittierungen der genannten Pakete durch das Gateway-Gerät (9) über das Netzwerk mit der höchsten RTT und Senden von Paketen durch den gemeinsamen Router (13) über das Netzwerk mit der höchsten RTT und Empfangen von Quittierungen der genannten Pakete durch das Gateway-Gerät (9) über das Netzwerk mit der niedrigsten RTT, um im Durchschnitt eine ähnliche RTT für alle Pakete zu erzielen.

17. Verfahren zur Datenverkehrsaggregation über verschiedene Netzwerke nach einem der Ansprüche 6 bis 15, **dadurch gekennzeichnet, dass** der Schritt des Regulierens von Datenverkehr das Einstellen einer speziellen Priorität für Geräte mit einer IP-Adresse beinhaltet, die zu einem Teilnehmer eines verdrahteten Netzwerks gehören, um eine bessere Dienstequalität für die Benutzer nur mit einer mobilen Funkverbindung zu erzielen.

## Revendications

1. Dispositif de passerelle (9) destiné à connecter simultanément un dispositif à une pluralité de réseaux, comprenant un réseau primaire et un réseau secondaire, ledit réseau secondaire étant un réseau de télécommunications mobiles (12), la passerelle comprenant :
- une pluralité de modules de communication (1,2), chaque module de communication étant configuré pour établir une connexion et transférer des données avec un réseau respectif, le module de communication correspondant au réseau primaire étant configuré en outre pour obtenir une adresse IP afin de communiquer tout d'abord avec le réseau primaire ; et
- un moyen d'agrégation (3) comprenant :
une unité d'attribution (7) configurée pour attribuer une adresse IP identique à l'adresse IP obtenue pour la connexion établie du réseau primaire aux connexions restantes et
une unité d'échange de données (8) configurée pour échanger un trafic de données à travers les réseaux simultanément.

2. Dispositif de passerelle selon la revendication 1, **caractérisé en ce qu'**il comprend en outre
- un module de commande (4) comprenant
une unité de détection (5) configurée pour calculer, pour chaque réseau, des retards de paquets et une charge de trafic de données ;
une unité de régulation (6) configurée pour réguler le trafic de données sur chaque réseau.

3. Dispositif de passerelle selon la revendication 1 ou 2, dans lequel au moins le réseau primaire est un réseau filaire reposant sur une technologie sélectionnée parmi :
- xDSL,
- ADSL,
- VDSL,
- Fiber;
et le réseau de télécommunications mobiles repose sur une technologie sélectionnée parmi :
- UMTS,
- GSM,
- LTE-FDD,
- LTE-TDD,
- LTE-Advanced.

4. Dispositif de passerelle selon la revendication 2, **caractérisé en ce que** l'unité de régulation (6) régule le trafic de données, en établissant des niveaux de priorité basés sur au moins l'un des critères suivants :
- des retards de paquets de chaque réseau,
- la charge de chaque réseau,
et une combinaison de ceux-ci.

5. Dispositif de passerelle selon la revendication 2, **caractérisé en ce que** l'unité de détection (5) est agencée pour mesurer la différence moyenne de RTT entre les réseaux et déterminer s'il convient ou non de déclencher, en fonction d'un seuil de sécurité configurable (X), un mécanisme d'égalisation de retard afin d'éviter une dégradation de la performance.

6. Procédé d'agrégation de trafic de données sur une pluralité de réseaux, lesdits réseaux comportant un réseau primaire et un réseau secondaire, ledit réseau secondaire étant un réseau de télécommunications mobiles (12), le procédé comprenant les étapes consistant à :
- établir une première connexion avec le réseau primaire afin d'obtenir une adresse IP pour communiquer avec ledit réseau primaire ;
- établir au moins une connexion secondaire ayant une adresse IP identique à la connexion primaire, ladite connexion secondaire étant une connexion sur le réseau secondaire, en utilisant l'adresse IP obtenue à partir de la connexion de réseau primaire ; et
- configurer le réseau primaire et le réseau secondaire pour permettre l'échange d'un trafic de données sur le réseau primaire et sur le réseau secondaire simultanément.

7. Procédé d'agrégation de trafic de données sur différents réseaux selon la revendication 6, **caractérisé en ce qu'**il comprend en outre les étapes consistant à
- détecter, pour chaque réseau, qu'un état de congestion est ou non sur le point d'être atteint, et
- réguler le trafic de données sur les réseaux, par une mise en oeuvre d'un mécanisme d'égalisation de retard, afin d'éviter une dégradation de la performance.

8. Procédé d'agrégation de trafic de données sur différents réseaux selon la revendication 6 ou 7, **caractérisé en ce que** l'étape consistant à établir une connexion secondaire comprend :
- la requête de l'établissement d'un contexte PDP en utilisant l'adresse IP de la connexion primaire,
- l'activation du contexte PDP par le réseau radio mobile en fonction d'informations antérieures afin d'obtenir une adresse IP valable pour au moins une connexion radio.

9. Procédé selon la revendication 6 ou 7, dans lequel le réseau primaire est un réseau filaire reposant sur une technologie sélectionnée parmi :
- xDSL
- ADSL (11),
- VDSL
et le réseau radio mobile repose sur une technologie sélectionnée parmi :
- UMTS (22),
- GSM (23),
- LTE-FDD,
- LTE-TDD,
- LTE-Advanced.

10. Procédé d'agrégation de trafic de données sur différents réseaux selon les revendications 7 et 9, **caractérisé en ce que** l'étape de détection d'un état de congestion comprend en outre :
- l'envoi de paquets et la réception d'acquittements desdits paquets sur le réseau filaire afin d'estimer un RTT moyen (RTT A) dudit réseau,
- l'envoi de paquets et la réception d'acquittements desdits paquets sur au moins un réseau radio mobile afin d'estimer un RTT moyen (RTT B),
- la mesure de la différence de RTT moyenne entre le réseau filaire et chacun des réseaux radio mobiles pour déclencher, en fonction d'un seuil de sécurité configurable (X), un mécanisme convenable d'égalisation de retard pour le réseau ayant la plus basse valeur RTT afin de réguler le trafic de données et éviter une dégradation de la performance.

11. Procédé d'agrégation de trafic de données sur différents réseaux selon la revendication 10, **caractérisé en ce que** le mécanisme d'égalisation de retard comprend :
- la production d'un retard artificiel en mettant en file d'attente les paquets provenant du réseau ayant un RTT inférieur, et leur délivrance après un temps d'attente écoulé, le temps d'attente étant calculé en fonction des différences de RTT pour maintenir un retard similaire à celui du réseau ayant le RTT supérieur.

12. Procédé d'agrégation de trafic de données sur différents réseaux selon la revendication 11, **caractérisé en ce que** le mécanisme d'égalisation de retard comprend en outre :
- l'établissement, pour les canaux de liaison montante et de liaison descendante du réseau ayant le plus haut RTT, d'un seuil de contribution (Y_DL, Y_UL) représentant un pourcentage de rendement relativement au rendement global,
- l'estimation périodique du rendement des canaux de liaison montante et de liaison descendante et la comparaison à leur seuil de rendement respectif (Y_DL, Y_DL) afin de déterminer qu'une contribution importante est ou non atteinte pour au moins l'un des canaux, et
- le maintien du retard artificiel, en mettant en file d'attente les paquets des réseaux ayant un RTT inférieur, à condition que la contribution du réseau ayant le RTT supérieur soit importante.

13. Procédé d'agrégation de trafic de données sur différents réseaux selon la revendication 12, **caractérisé en ce que** l'étape de régulation du trafic de données comprend :
- la libération d'une connexion avec le réseau ayant un RTT supérieur à condition que, pour ses canaux de liaison montante et de liaison descendante, le seuil de contribution au rendement ne soit pas atteint et ledit réseau ayant un RTT supérieur soit un réseau radio mobile.

14. Procédé d'agrégation de trafic de données sur différents réseaux selon l'une quelconque des revendications 9 à 13, dans lequel les étapes sont exécutées soit dans le dispositif de passerelle (9), soit dans le routeur commun (13).

15. Procédé d'agrégation de trafic radio et de données filaires selon les revendications 7 et 9, **caractérisé en ce que** l'étape de détection de retards de paquets comprend en outre :
- l'envoi de paquets par le dispositif de passerelle (9) sur le réseau au RTT le plus bas et la réception d'acquittements desdits paquets par le routeur commun sur le réseau au RTT le plus haut et l'envoi de paquets par le dispositif de passerelle (9) sur le réseau ayant le RTT le plus haut et la réception d'acquittements desdits paquets par ledit routeur commun sur le réseau ayant le RTT le plus bas afin de parvenir en moyenne à un RTT similaire pour tous les paquets.

16. Procédé d'agrégation de trafic de données sur différents réseaux selon les revendications 7 et 9, **caractérisé en ce que** les étapes de détection de retards de paquets comprend en outre : l'envoi de paquets par le routeur commun sur le réseau au RTT le plus bas et la réception d'acquittements desdits paquets par le dispositif de passerelle (9) sur le réseau au RTT le plus haut et l'envoi de paquets par le routeur commun (13) sur le réseau au RTT le plus haut et la réception d'acquittements desdits paquets par le dispositif de passerelle (9) sur le réseau au RTT le plus bas afin de parvenir en moyenne à un RTT similaire pour tous les paquets.

17. Procédé d'agrégation de trafic de données sur différents réseaux selon l'une quelconque des revendications 6 à 15, **caractérisé en ce que** l'étape de régulation du trafic de données comprend l'établissement d'une priorité spéciale pour les dispositifs ayant une adresse IP appartenant à un abonné d'un réseau filaire afin de conférer une meilleure qualité de service aux utilisateurs n'ayant qu'une seule connexion radio mobile.
